# EUROPEAN PATENT APPLICATION

(11) **EP 4 170 940 A1**
(43) Date of publication of application: **26.04.2023**
(21) Application number: 21828303.4
(22) Date of filing: 04.03.2021
(51) Int. Cl.: H04L 1/00, H04W 72/12

(54) **DATA PROCESSING METHOD AND APPARATUS, AND STORAGE MEDIUM AND ELECTRONIC APPARATUS**

(30) Priority: 23.06.2020 CN 202010582722
(71) Applicant: ZTE Corporation, Shenzhen, Guangdong 518057 (CN)
(72) Inventor: PI, Qiang, Shenzhen, Guangdong 518057 (CN); WANG, Lilin, Shenzhen, Guangdong 518057 (CN); TIAN, Chunyu, Shenzhen, Guangdong 518057 (CN); WU, Xueqiang, Shenzhen, Guangdong 518057 (CN); QIN, Cong, Shenzhen, Guangdong 518057 (CN)
(74) Representative: Regimbeau
(86) International application number: PCT/CN2021/079098
(87) International publication number: WO 2021/258773

(57) **Abstract**

Disclosed are a data processing method and apparatus, and a storage medium and an electronic apparatus. The data processing method comprises: acquiring first data to be processed that is issued by a base station in a slot N, performing decoding processing on the first data to be processed, and reporting ACK information or NACK information to the base station according to a decoding processing result; and acquiring first DCI indication information issued by the base station in a slot N+1, and according to the first DCI indication information, performing a zero clearing operation on a first URLLC puncturing position in the first data to be processed, so as to obtain first data, wherein the first DCI indication information is used for indicating position information of the first URLLC puncturing position in the first data to be processed, and N is a natural number.

## Description

### TECHNICAL FIELD

The present application relates to the field of communications, for example, a data processing method and apparatus, a storage medium and an electronic apparatus.

### BACKGROUND

In a downlink of a 5th-generation mobile communication system (5G), in addition to an enhanced Mobile Broadband (eMBB) traffic, traffics including the combination of eMMB and Ultra-Reliable Low-Latency Communications (URLLC) may exist.

In an application scenario where the eMMB+URLLC traffics exist at the same time, data transmissions of the two types of traffics may be performed in many manners, one of which is a puncturing manner. In the puncturing manner, during the data transmission of eMMB, a certain volume of eMBB data is punctured by URLLC. In a receiving direction of downlink user equipment (LTE), for the eMBB traffic, a position punctured by the URLLC belongs to an interference signal, and the interference signal needs to be subjected to zero clearing to continue the eMBB processing. Since indication information of the position of the eMBB punctured by the URLLC needs to be indicated in downlink control information (DCI) in a next slot, the eMBB processing generally cannot start until the DCI from a base station is received, resulting in additional time of one slot being added to an eMBB processing delay.

### SUMMARY

The present application provides a data processing method and apparatus, a storage medium and an electronic apparatus, so as to at least solve the problem in the related art that additional time of one slot is added to a delay during eMBB processing.

A data processing method is provided, the method includes: acquiring first to-be-processed data delivered in a slot N by a base station, performing decoding processing on the first to-be-processed data, and reporting acknowledgement (ACK) information or negative acknowledgement (NACK) information to the base station according to a decoding processing result; and acquiring first DCI indication information delivered in a slot N+1 by the base station, and performing a zero clearing operation on a first URLLC-punctured position in the first to-be-processed data according to the first DCI indication information to obtain first data, where the first DCI indication information is configured for indicating position information of the first URLLC-punctured position in the first to-be-processed data, and N is a natural number.

A data processing apparatus is further provided, which includes a first processing module and a second processing module. The first processing module is configured to acquire first to-be-processed data delivered in a slot N by a base station, perform decoding processing on the first to-be-processed data, and report ACK information or NACK information to the base station according to a decoding processing result. The second processing module is configured to acquire first DCI indication information delivered in a slot N+1 by the base station, and perform a zero clearing operation on a first URLLC-punctured position in the first to-be-processed data according to the first DCI indication information to obtain first data, where the first DCI indication information is configured for indicating position information of the first URLLC-punctured position in the first to-be-processed data, and N is a natural number.

A computer-readable storage medium is further provided. The computer-readable storage medium stores a computer program. The computer program is configured to, when executed, perform the above data processing method.

An electronic apparatus is further provided. The electronic apparatus includes a memory and a processor. The memory stores a computer program. The processor is configured to execute the computer program to perform the above data processing method.

### BRIEF DESCRIPTION OF DRAWINGS

FIG. 1 is a block diagram of hardware of a mobile terminal for a data processing method according to an embodiment of the present application.
FIG. 2 is a flowchart of a data processing method according to an embodiment of the present application.
FIG. 3 is a flowchart of another data processing method according to an embodiment of the present application.

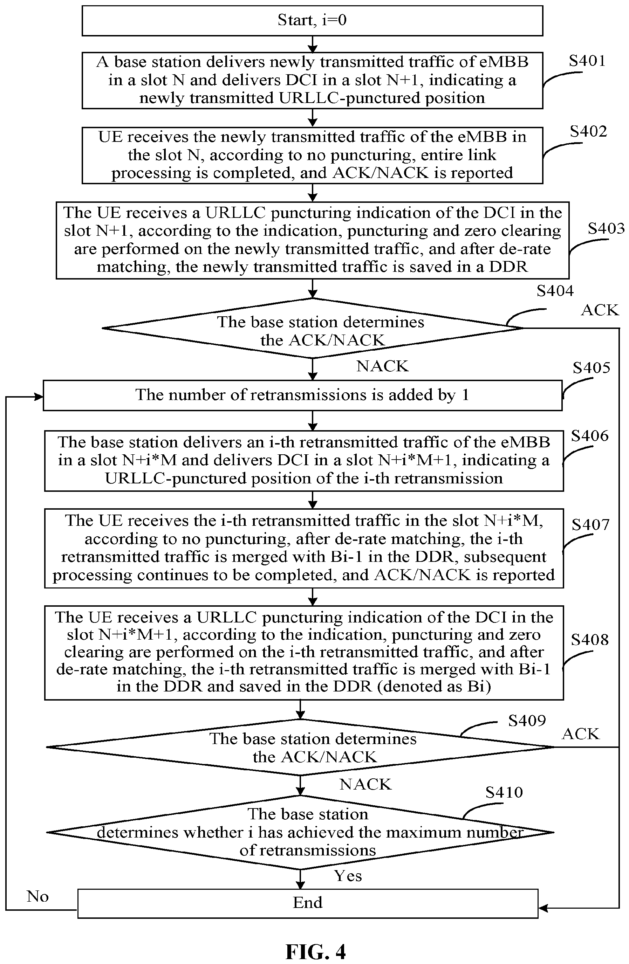

FIG. 4 is a flowchart of another data processing method according to an embodiment of the present application.
FIG. 5 is a block diagram of a data processing apparatus according to an embodiment of the present application.

### DETAILED DESCRIPTION

Embodiments of the present application will be described hereinafter with reference to the drawings and in conjunction with embodiments.

The terms "first", "second" and the like herein are used for distinguishing between similar objects and are not necessarily used for describing a particular sequence or order.

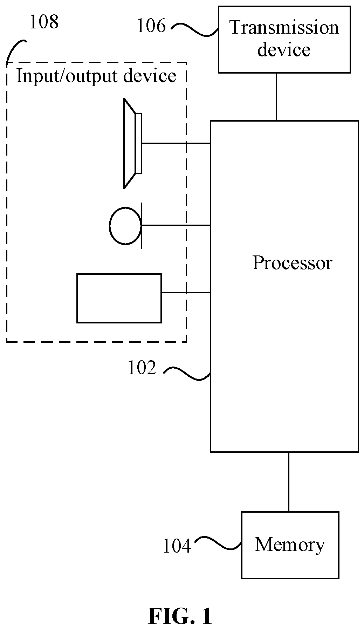

Method embodiments provided in the embodiments of the present application may be performed in a mobile terminal, a computer terminal or similar computing apparatuses. Using the method to be performed in the mobile terminal as an example, FIG. 1 is a block diagram of hardware of a mobile terminal for a data processing method according to an embodiment of the present application. As shown in FIG. 1, the mobile terminal may include one or more (merely one is shown in FIG. 1) processors 102 (the processor 102 may include, but is not limited to, a processing apparatus such as a microcontroller unit (MCU) or a field-programmable gate array (FPGA)) and a memory 104 configured to store data, where the mobile terminal may further include a transmission device 106 configured to implement a communication function and an input/output device 108. The structure shown in FIG. 1 is merely illustrative and not intended to limit the structure of the above mobile terminal. For example, the mobile terminal may further include more or fewer components than the components shown in FIG. 1 or may have a configuration different from the configuration shown in FIG. 1.

The memory 104 may be configured to store a computer program such as a software program and a module of application software, for example, a computer program corresponding to the data processing method in the embodiment of the present application. The processor 102 executes the computer program stored in the memory 104 to perform various function applications and data processing, that is, to implement the above method. The memory 104 may include a high-speed random-access memory and may further include a non-volatile memory such as one or more magnetic storage apparatuses, flash memories or other non-volatile solid-state memories. In some examples, the memory 104 may include memories which are remotely disposed with respect to the processor 102 and these remote memories may be connected to the mobile terminal via a network. Examples of the above network include, but are not limited to, the Internet, an intranet, a local area network, a mobile communication network and a combination thereof.

The transmission apparatus 106 is configured to receive or send data via a network. Specific examples of the above network may include a wireless network provided by a communication provider of the mobile terminal. In an example, the transmission apparatus 106 includes a network interface controller (NIC) which may be connected to other network devices via a base station and thus is capable of communicating with the Internet. In an example, the transmission apparatus 106 may be a radio frequency (RF) module configured to communicate with the Internet in a wireless way.

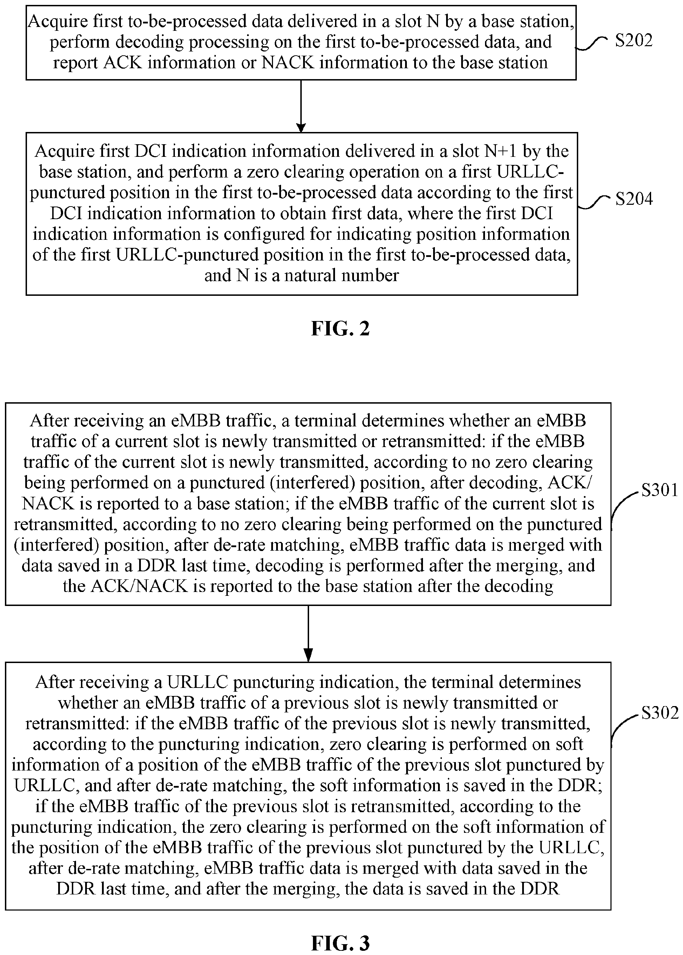

This embodiment provides a data processing method to be performed in the above mobile terminal. FIG. 2 is a flowchart of a data processing method according to an embodiment of the present application. As shown in FIG. 2, the flow includes the steps described below.

In step S202, first to-be-processed data delivered in a slot N by a base station is acquired, decoding processing is performed on the first to-be-processed data, and ACK information or NACK information is reported to the base station.

The step S202 may also be as follows: first to-be-processed data delivered in a slot N by a base station is acquired, zero clearing operation is not performed on a first URLLC-punctured position in the first to-be-processed data, decoding processing is performed on the first to-be-processed data, and ACK information or NACK information is reported to the base station.

In step S204, first DCI indication information delivered in a slot N+1 by the base station is acquired, and a zero clearing operation is performed on a first URLLC-punctured position in the first to-be-processed data according to the first DCI indication information to obtain first data, where the first DCI indication information is configured for indicating position information of the first URLLC-punctured position in the first to-be-processed data, and N is a natural number. The zero clearing operation may be as follows: a position of the first URLLC-punctured position in the first to-be-processed data is determined according to the DCI indication information, and a value corresponding to the first URLLC-punctured position is replaced with 0.

The above steps may, but may not necessarily, be executed by a terminal.

In a possible embodiment, the present application relates to the field of wireless communications, for example, a processing scenario of an eMBB traffic of a downlink terminal when URLLC and eMBB coexist, and the present application may also be applied to a scenario of a New Radio communication or a 5G.

Through the above step, the first to-be-processed data delivered in the slot N by the base station is acquired, the decoding processing is performed on the first to-be-processed data in the slot N, and the ACK information or the NACK information is reported to the base station, then the first DCI indication information delivered in the slot N+1 by the base station is acquired, and the zero clearing operation is performed on the first URLLC-punctured position in the first to-be-processed data according to the position information of the first URLLC-punctured position in the first to-be-processed data indicated by the first DCI indication information to obtain the first data. In the above process, before the DCI indication information delivered by the base station is not acquired, the decoding processing may be performed on the to-be-processed data in advance by one slot. Compared with the related art, after the DCI indication information is received in the slot N+1 (a next slot of the slot N), the zero clearing operation and the decoding processing are performed on the to-be-processed data. In the above manner, the decoding processing on the to-be-processed data may start in advance by one slot. Therefore, the problem that the additional time of one slot may be added to a delay during eMBB processing is solved, achieving an effect of reducing the decoding delay.

In a possible embodiment, after the first to-be-processed data delivered in the slot N by the base station is acquired, the method further includes: in the case where it is determined that the first to-be-processed data is determined to be newly transmitted data, the following steps are performed: zero clearing operation is not performed on the first URLLC-punctured position in the first to-be-processed data, and the first to-be-processed data is marked with a first label to obtain first to-be-processed data of the first label. The zero clearing operation being performed on the first URLLC-punctured position in the first to-be-processed data according to the first DCI indication information to obtain the first data includes: a zero clearing operation is performed on a first URLLC-punctured position in the first to-be-processed data of the first label according to the first DCI indication information, and de-rate matching is performed on the first to-be-processed data of the first label to obtain the first data.

The terminal receives the first to-be-processed data delivered in the slot N by the base station and determines whether the first to-be-processed data is determined to be newly transmitted data or retransmitted data. If the first to-be-processed data is the newly transmitted data, zero clearing operation may not be performed on the first URLLC-punctured position in the first to-be-processed data, the first to-be-processed data is marked with the first label to obtain the first to-be-processed data of the first label, and decoding processing is performed on the first to-be-processed data of the first label.

The terminal receives the first DCI indication information delivered in the slot N+1 by the base station, the zero clearing operation is performed on the first URLLC-punctured position in the first to-be-processed data of the first label, and the de-rate matching is performed on the first to-be-processed data of the first label to obtain the first data.

For example, the first label may be A0, where A may be used for representing the first to-be-processed data before demodulation. The above is merely an example, which is not limited in this implementation.

In a possible embodiment, after the zero clearing operation is performed on the first URLLC-punctured position in the first to-be-processed data of the first label according to the first DCI indication information and the de-rate matching is performed on the first to-be-processed data of the first label to obtain the first data, the method further includes: the first data is marked with a second label to obtain first data of the second label, and the first data of the second label is saved in a target cache.

After the first data is obtained, the first data may be marked with the second label to obtain the first data of the second label, and the first data of the second label is saved in the target cache, for example, in an external double data rate synchronous dynamic random-access memory (DDR SDRAM).

For example, the second label may be B0, where B may be used for representing that after the de-rate matching is performed on the first to-be-processed data, the first data is obtained. The above is merely an example, which is not limited in this implementation.

In a possible embodiment, in the case where the NACK information is reported to the base station and the maximum number of retransmissions has not been achieved, the method further includes: second to-be-processed data delivered in a slot N+i*M by the base station is acquired, decoding processing is performed on the second to-be-processed data, and ACK information or NACK information is reported to the base station, where the second to-be-processed data and the first to-be-processed data are the same traffic data, M is used for representing a retransmission interval, i is used for representing the number of retransmissions, i is a positive integer, and M is a positive integer; second DCI indication information delivered in a slot N+i*M+1 by the base station is acquired, and a zero clearing operation is performed on a second URLLC-punctured position in the second to-be-processed data according to the second DCI indication information to obtain second data, where the second DCI indication information is configured for indicating position information of the second URLLC-punctured position in the second to-be-processed data.

In the case where the NACK information is reported to the base station, the second to-be-processed data (the same traffic data as the first to-be-processed data) needs to be retransmitted, the second to-be-processed data delivered in the slot N+i*M by the base station is acquired, the decoding processing is performed on the second to-be-processed data, and the ACK information or the NACK information is reported to the base station, where the second to-be-processed data and the first to-be-processed data are the same traffic data, M is used for representing the retransmission interval, i is used for representing the number of retransmissions, i is a positive integer, and M is a positive integer; the second DCI indication information delivered in the slot N+i*M+1 by the base station is acquired, and the zero clearing operation is performed on the second URLLC-punctured position in the second to-be-processed data according to the second DCI indication information to obtain the second data, where the second DCI indication information is configured for indicating the position information of the second URLLC-punctured position in the second to-be-processed data.

Each retransmission interval may be set as a fixed value, or may be set as a different value, which is not limited here.

In the case where the ACK information is reported to the base station, that is, the terminal successfully receives the first to-be-processed data, a transmission process of eMBB traffic data in this round may be ended.

In a possible embodiment, after the second to-be-processed data delivered in the slot N+i*M by the base station is acquired, and before the decoding processing is performed on the second to-be-processed data and the ACK information or the NACK information is reported to the base station, the method further includes: in the case where it is determined that the second to-be-processed data is determined to be retransmitted data, the following steps are performed: no zero clearing operation is performed on the second URLLC-punctured position in the second to-be-processed data, the second to-be-processed data is marked with a third label to obtain second to-be-processed data of the third label, de-rate matching is performed on the second to-be-processed data of the third label, and the second to-be-processed data of the third label after the de-rate matching is merged with third data delivered in a slot N+(i-1)*M by the base station to obtain merged data, where the third data is data saved in a target cache in the slot N+(i-1)*M; the zero clearing operation being performed on the second URLLC-punctured position in the second to-be-processed data according to the second DCI indication information to obtain the second data includes: a zero clearing operation is performed on a second URLLC-punctured position in the second to-be-processed data of the third label according to the second DCI indication information to obtain fourth data, de-rate matching is performed on the fourth data, and the fourth data after the de-rate matching is merged with the third data delivered in the slot N+(i-1)*M by the base station to obtain the second data, where the fourth data is data obtained after the zero clearing operation is performed on the second to-be-processed data of the third label.

The terminal receives, in slot N+i*M, the second to-be-processed data delivered by the base station and determines whether the second to-be-processed data is determined to be newly transmitted data or retransmitted data. If the second to-be-processed data is the retransmitted data, no zero clearing operation may be performed on the second URLLC-punctured position in the second to-be-processed data, the second to-be-processed data is marked with the third label to obtain the second to-be-processed data of the third label, the de-rate matching is performed on the second to-be-processed data of the third label, and the second to-be-processed data of the third label after the de-rate matching is merged with the third data delivered in the slot N+(i-1)*M by the base station to obtain the merged data. Decoding processing is performed on the second to-be-processed data of the third label, and the ACK information or the NACK information is reported to the base station, where the third data is the data saved in the target cache in the slot N+(i-1)*M.

The terminal receives, in the slot N+i*M+1, the second DCI indication information delivered by the base station, the zero clearing operation is performed on the second URLLC-punctured position in the second to-be-processed data of the third label to obtain the fourth data, the de-rate matching is performed on the fourth data, and the fourth data after the de-rate matching is merged with the third data delivered in the slot N+(i-1)*M by the base station to obtain the second data, where the fourth data is the data obtained after the zero clearing operation is performed on the second to-be-processed data of the third label. In this manner of merging data, the merged data can be more complete.

For example, the third label may be Ai. The above is merely an example, which is not limited in this implementation.

In a possible embodiment, in the case where i in N+(i-1)*M is equal to 1, the third data is the first data.

In a possible embodiment, after the fourth data after the de-rate matching is merged with the third data delivered in the slot N+(i-1)*M by the base station to obtain the second data, the method further includes: the second data is marked with a fourth label to obtain second data of the fourth label, and the second data of the fourth label is saved in the target cache.

After the second data is obtained, the second data may be marked with the fourth label to obtain the second data of the fourth label, and the second data of the fourth label is saved in the target cache, for example, in the external DDR SDRAM.

For example, the fourth label may be Bi, where B may be used for representing that after the de-rate matching and the merging are performed on the second to-be-processed data, the second data is obtained. The above is merely an example, which is not limited in this implementation.

The flow of the above data processing method is described below in conjunction with an example. As shown in FIG. 3, the flow includes the steps described below.

In step S301, after receiving an eMBB traffic (such as the above first to-be-processed data), a terminal determines whether an eMBB traffic of a current slot (such as the above slot N) is newly transmitted or retransmitted: if the eMBB traffic of the current slot is newly transmitted, according to no zero clearing being performed on a punctured (interfered) position, after decoding, ACK/NACK is reported to a base station; if the eMBB traffic of the current slot is retransmitted, according to no zero clearing being performed on the punctured (interfered) position, after de-rate matching, eMBB traffic data is merged with data saved in an external DDR SDRAM last time in step S302, decoding is performed after the merging, and the ACK/NACK is reported to the base station after the decoding.

In step S302, after receiving a URLLC puncturing indication (such as the above first DCI indication information) in a slot N+1, the terminal determines whether an eMBB traffic of a previous slot (such as the slot N) is newly transmitted or retransmitted: if the eMBB traffic of the previous slot is newly transmitted, according to the puncturing indication, zero clearing is performed on soft information (such as the first URLLC-punctured position) of a position of the eMBB traffic of the previous slot (such as the slot N) punctured by URLLC, and after de-rate matching, the soft information is saved in the external DDR SDRAM; if the eMBB traffic of the previous slot is retransmitted, according to the puncturing indication, the zero clearing is performed on the soft information of the position of the eMBB traffic of the previous slot (such as the slot N) punctured by the URLLC, after de-rate matching, eMBB traffic data is merged with data saved in the DDR SDRAM last time, and after the merging, the data is saved in the DDR SDRAM.

The flow of the above data processing method is described below in conjunction with an example. In step S402, UE receives the newly transmitted eMBB traffic data (denoted as A0) in the slot N, according to no puncturing manner (zero clearing operation is not performed), demodulation, descrambling, deinterleaving, de-rate matching, low-density parity-check code (LDPC) decoding, decode block cyclic redundancy check (CB CRC) and detransport block CRC (TB CRC) are completed in sequence, and ACK/NACK after new transmission processing is reported.

In step S403, after the LTE receives URLLC puncturing indication information corresponding to the newly transmitted traffic data of eMBB in the slot N+1, according to the puncturing indication information, the newly transmitted traffic data of the eMBB labeled A0 is demodulated, zero clearing is performed on soft information (such as the first URLLC-punctured position) at the puncturing position of the newly transmitted traffic data of the eMBB labeled A0, descrambling, deinterleaving and de-rate matching of A0 are completed again, and the information after the de-rate matching is saved in an external DDR SDRAM (denoted as B0).

In step S404, if an indication reported to the base station after the new transmission is the ACK, the base station does not need to deliver a hybrid automatic repeat request (HARQ) retransmission, and the processing ends.

In step S405, if the indication reported to the base station after the new transmission is the NACK, the number i of retransmissions is added by 1 (an initial value of i is 0).

In step S406, the base station delivers an i-th HARQ retransmission in a slot N+i*M and delivers DCI in a slot N+i*M+1 to indicate a URLLC-punctured position of the i-th retransmission, where M is used for representing a retransmission interval, i is used for representing the number of retransmissions, i is a positive integer, and M is a positive integer.

Each retransmission interval may be set as a fixed value, or may be set as a different value, which is not limited here.

In step S407, the LTE receives i-th retransmitted eMBB traffic data (denoted as Ai) in the slot N+i*M, according to no puncturing processing, demodulation, descrambling, deinterleaving and de-rate matching are completed in sequence, the i-th retransmitted eMBB traffic data is merged with data corresponding to Bi-1 in the DDR SDRAM, LDPC decoding, de-CB CRC and de-TB CRC are completed, and ACK/NACK after the i-th retransmission is reported.

In step S408, the UE receives a URLLC puncturing indication corresponding to the i-th retransmitted traffic data of the eMBB in the slot N+i*M+1, according to the puncturing indication, zero clearing is performed on demodulated soft information at the puncturing position, descrambling, deinterleaving and de-rate matching of Ai are completed again, the data after the de-rate matching is merged with the data corresponding to Bi-1 in the DDR SDRAM saved in the DDR SDRAM (denoted as Bi).

In step S409, if an indication reported to the base station after the i-th retransmission is the ACK, the base station does not need to deliver an HARQ retransmission, and the processing ends.

In step S410, if the indication reported to the base station after the i-th retransmission is the NACK, the number i of retransmissions is added by 1, and steps S406 to S410 are repeated; alternatively, the maximum number of retransmissions is reached (such as 3 or 4), the base station does not initiate a retransmission any more, and the processing ends.

In this embodiment, with the help of an error correction function of an LDPC, when the terminal receives the eMBB traffic data in the current slot, no zero clearing may be performed according to the punctured (interfered) position, and after decoding, the ACK/NACK is reported to the base station. In the related art, after the terminal receives the URLLC puncturing indication in the next slot of the eMBB traffic, according to the puncturing indication, the zero clearing is performed on the punctured position, and the eMBB decoding starts. Compared with the related art, this embodiment can avoid the problem that since the URLLC puncturing indication information is received in the next slot, one slot needs to be added to the eMBB delay.

From the description of the preceding embodiments, the method in the preceding embodiments may be implemented by software plus a necessary general-purpose hardware platform or may be implemented by hardware. The technical solutions of the present application may be embodied in the form of a software product. The computer software product is stored in a storage medium (such as a read-only memory (ROM), a random-access memory (RAM), a magnetic disk or an optical disc) and includes multiple instructions for enabling a terminal device (which may be a mobile phone, a computer, a server, a network device or the like) to perform the method according to the embodiments of the present application.

An embodiment further provides a data processing apparatus. The apparatus is configured for implementing the preceding embodiments and optional embodiments. What has been described will not be repeated. As used below, the term "module" may be software, hardware or a combination thereof capable of implementing predetermined functions. The apparatus described in the following embodiments is implemented by software, but an implementation by hardware or by a combination of software and hardware is also possible and conceived.

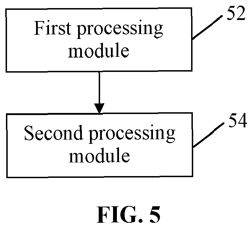

FIG. 5 is a block diagram of a data processing apparatus according to an embodiment of the present application. As shown in FIG. 5, the apparatus includes a first processing module 52 and a second processing module 54.

The first processing module 52 is configured to acquire first to-be-processed data delivered in a slot N by a base station, perform decoding processing on the first to-be-processed data, and report ACK information or NACK information to the base station. The second processing module 54 is configured to acquire first DCI indication information delivered in a slot N+1 by the base station, and perform a zero clearing operation on a first URLLC-punctured position in the first to-be-processed data according to the first DCI indication information to obtain first data, where the first DCI indication information is configured for indicating position information of the first URLLC-punctured position in the first to-be-processed data, and N is a natural number.

In a possible embodiment, the apparatus further includes a third processing module. The third processing module is configured to perform the following steps in the case where it is determined that the first to-be-processed data is determined to be newly transmitted data: no zero clearing operation is performed on the first URLLC-punctured position in the first to-be-processed data, and the first to-be-processed data is marked with a first label to obtain first to-be-processed data of the first label; the second processing module is configured to perform a zero clearing operation on the first URLLC-punctured position in the first to-be-processed data of the first label according to the first DCI indication information, and perform de-rate matching on the first to-be-processed data of the first label to obtain the first data.

In a possible embodiment, the apparatus further includes a fourth processing module. The fourth processing module is configured to mark the first data with a second label to obtain first data of the second label, and save the first data of the second label in a target cache.

In a possible embodiment, the apparatus further includes a fifth processing module and a sixth processing module. The fifth processing module is configured to acquire, in the case where the NACK information is reported to the base station and the maximum number of retransmissions has not been achieved, second to-be-processed data delivered in a slot N+i*M by the base station, perform decoding processing on the second to-be-processed data, and report ACK information or NACK information to the base station, where the second to-be-processed data and the first to-be-processed data are the same traffic data, M is used for representing a retransmission interval, i is used for representing the number of retransmissions, i is a positive integer, and M is a positive integer. The sixth processing module is configured to acquire second DCI indication information delivered in a slot N+i^{∗}M+1 by the base station, and perform a zero clearing operation on a second URLLC-punctured position in the second to-be-processed data according to the second DCI indication information to obtain second data, where the second DCI indication information is configured for indicating position information of the second URLLC-punctured position in the second to-be-processed data.

In a possible embodiment, the apparatus further includes a seventh processing module. The seventh processing module is configured to perform, in the case where it is determined that the second to-be-processed data is determined to be retransmitted data, the following steps: no zero clearing operation is performed on the second URLLC-punctured position in the second to-be-processed data, the second to-be-processed data is marked with a third label to obtain second to-be-processed data of the third label, de-rate matching is performed on the second to-be-processed data of the third label, and the second to-be-processed data of the third label after the de-rate matching is merged with third data delivered in a slot N+(i-1)*M by the base station to obtain merged data, where the third data is data saved in a target cache in the slot N+(i-1)*M. The sixth processing module is configured to perform a zero clearing operation on a second URLLC-punctured position in the second to-be-processed data of the third label according to the second DCI indication information to obtain fourth data, perform de-rate matching on the fourth data, and merge the fourth data after the de-rate matching with the third data delivered in the slot N+(i-1)*M by the base station to obtain the second data, where the fourth data is data obtained after the zero clearing operation is performed on the second to-be-processed data of the third label. In a possible embodiment, in the case where i in N+(i-1)*M is equal to 1, the third data is the first data.

In a possible embodiment, the apparatus further includes an eighth processing module. The eighth processing module is configured to mark the second data with a fourth label to obtain second data of the fourth label, and save the second data of the fourth label in the target cache.

The above modules may be implemented by software or hardware. The implementation by hardware may, but may not necessarily, be performed in the following manner: the above modules are located in the same processor or located in different processors in any combination form. An embodiment of the present application further provides a computer-readable storage medium. The computer-readable storage medium stores a computer program. The computer program is configured to, when executed, perform steps of any one of the preceding method embodiments. In an example embodiment, the above computer-readable storage medium may include, but is not limited to, a USB flash drive, an ROM, an RAM, a mobile hard disk, a magnetic disk, an optical disc or multiple media capable of storing computer programs.

An embodiment of the present application further provides an electronic apparatus. The electronic apparatus includes a memory and a processor. The memory stores a computer program. The processor is configured to execute the computer program to perform steps of any one of the preceding method embodiments.

In an example embodiment, the above electronic apparatus may further include a transmission device and an input/output device. Both the transmission device and the input/output device are connected to the processor.

For specific examples in this embodiment, reference may be made to the examples described in the preceding embodiments and example embodiments, and the examples will not be repeated in this embodiment.

The above modules or steps of the present application may be implemented by a general-purpose computing device. The modules or steps may be concentrated on a single computing device or distributed on a network composed of multiple computing devices. The modules or steps may be implemented by program codes executable by a computing device so that the modules or steps may be stored in a storage device and executed by the computing device. In some circumstances, the illustrated or described steps may be performed in sequences different from those described herein. Alternatively, the modules or steps may be made into various integrated circuit modules, or multiple modules or steps therein may be made into a single integrated circuit module for implementation. In this manner, the present application is not limited to any particular combination of hardware and software.

## Claims

1. A data processing method, comprising:
acquiring first to-be-processed data delivered in a slot N by a base station, performing decoding processing on the first to-be-processed data, and reporting acknowledgement, ACK, information or negative acknowledgement, NACK, information to the base station according to a decoding processing result; and
acquiring first downlink control information, DCI, indication information delivered in a slot N+1 by the base station, and performing a zero clearing operation on a first Ultra-Reliable Low-Latency Communications-punctured position, URLLC-punctured position, in the first to-be-processed data according to the first DCI indication information to obtain first data, wherein the first DCI indication information is configured for indicating position information of the first URLLC-punctured position in the first to-be-processed data, and N is a natural number.

2. The method according to claim 1, after acquiring the first to-be-processed data delivered in the slot N by the base station, further comprising:
in a case where the first to-be-processed data is determined to be newly transmitted data, not performing zero clearing operation on the first URLLC-punctured position in the first to-be-processed data, and marking the first to-be-processed data with a first label to obtain first to-be-processed data of the first label;
wherein the performing the zero clearing operation on the first URLLC-punctured position in the first to-be-processed data according to the first DCI indication information to obtain the first data comprises:
performing a zero clearing operation on a first URLLC-punctured position in the first to-be-processed data of the first label according to the first DCI indication information, and performing de-rate matching on the first to-be-processed data of the first label to obtain the first data.

3. The method according to claim 2, after the performing the zero clearing operation on the first URLLC-punctured position in the first to-be-processed data of the first label according to the first DCI indication information and performing the de-rate matching on the first to-be-processed data of the first label to obtain the first data, further comprising:
marking the first data with a second label to obtain first data of the second label, and saving the first data of the second label in a target cache.

4. The method according to claim 1, wherein in a case where the NACK information is reported to the base station and a maximum number of retransmissions has not been achieved, further comprising:
acquiring second to-be-processed data delivered in a slot N+i*M by the base station, performing decoding processing on the second to-be-processed data, and reporting ACK information or NACK information to the base station according to a decoding processing result, wherein the second to-be-processed data and the first to-be-processed data are same traffic data, M is used for representing a retransmission interval, i is used for representing a number of retransmissions, i is a positive integer, and M is a positive integer; and
acquiring second DCI indication information delivered in a slot N+i*M+1 by the base station, and performing a zero clearing operation on a second URLLC-punctured position in the second to-be-processed data according to the second DCI indication information to obtain second data, wherein the second DCI indication information is configured for indicating position information of the second URLLC-punctured position in the second to-be-processed data.

5. The method according to claim 4, after acquiring the second to-be-processed data delivered in the slot N+i*M by the base station, and before performing the decoding processing on the second to-be-processed data and reporting the ACK information or the NACK information to the base station according to the decoding processing result, further comprising:
in a case where it is determined that the second to-be-processed data is determined to be retransmitted data, not performing zero clearing operation on the second URLLC-punctured position in the second to-be-processed data, marking the second to-be-processed data with a third label to obtain second to-be-processed data of the third label, performing de-rate matching on the second to-be-processed data of the third label, and merging the second to-be-processed data of the third label after the de-rate matching with third data delivered in a slot N+(i-1)*M by the base station to obtain merged data, wherein the third data is data saved in a target cache in the slot N+(i-1)*M;
wherein performing the decoding processing on the second to-be-processed data comprises:
performing decoding processing on the merged data;
wherein performing the zero clearing operation on the second URLLC-punctured position in the second to-be-processed data according to the second DCI indication information to obtain the second data comprises:
performing a zero clearing operation on a second URLLC-punctured position in the second to-be-processed data of the third label according to the second DCI indication information to obtain fourth data, performing de-rate matching on the fourth data, and merging the fourth data after the de-rate matching with the third data delivered in the slot N+(i-1)*M by the base station to obtain the second data.

6. The method according to claim 5, wherein in a case where i in N+(i-1)*M is equal to 1, the third data is the first data.

7. The method according to claim 5, after merging the fourth data after the de-rate matching with the third data delivered in the slot N+(i-1)*M by the base station to obtain the second data, further comprising:
marking the second data with a fourth label to obtain second data of the fourth label, and saving the second data of the fourth label in the target cache.

8. A data processing apparatus, comprising:
a first processing module, which is configured to acquire first to-be-processed data delivered in a slot N by a base station, perform decoding processing on the first to-be-processed data, and report acknowledgement, ACK, information or negative acknowledgement, NACK, information to the base station according to a decoding processing result; and
a second processing module, which is configured to acquire first downlink control information, DCI, indication information delivered in a slot N+1 by the base station, and perform a zero clearing operation on a first Ultra-Reliable Low-Latency Communications-punctured position, URLLC-punctured position, in the first to-be-processed data according to the first DCI indication information to obtain first data, wherein the first DCI indication information is configured for indicating position information of the first URLLC-punctured position in the first to-be-processed data, and N is a natural number.

9. A computer-readable storage medium, which stores a computer program, wherein the computer program is configured to, when executed, perform the data processing method according to any one of claims 1 to 7 is performed.

10. An electronic apparatus, comprising a memory and a processor, wherein the memory stores a computer program, and the processor is configured to execute the computer program to perform the data processing method according to any one of claims 1 to 7.
